(19) **Europäisches Patentamt**

**European Patent Office**

**Office européen des brevets**

(11) **EP 0 885 565 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(51) Int Cl.⁷: **A22C 11/02**

(21) Anmeldenummer: **98110928.3**

(22) Anmeldetag: **15.06.1998**

(54) **Verfahren und Vorrichtung zum Befüllen von Wursthüllen**

Method and device for stuffing sausage casings

Procédé et dispositif de bourrage de boyaux de saucisses

(84) Benannte Vertragsstaaten:
**AT CH DE ES FR GB IT LI**

(30) Priorität: **20.06.1997 DE 19726238**

(43) Veröffentlichungstag der Anmeldung:
**23.12.1998 Patentblatt 1998/52**

(73) Patentinhaber: **Albert Handtmann Maschinenfabrik GmbH & Co. KG**
**D-88400 Biberach (DE)**

(72) Erfinder:
• **Schliesser, Gerhard**
**88489 Wain (DE)**

• **Schliesser, Markus**
**88489 Wain (DE)**
• **Schmid, Klaus**
**88499 Daugendorf (DE)**

(74) Vertreter: **Grünecker, Kinkeldey, Stockmair & Schwanhäusser Anwaltssozietät**
**Maximilianstrasse 58**
**80538 München (DE)**

(56) Entgegenhaltungen:
**US-A- 3 191 222      US-A- 4 021 885**
**US-A- 4 744 129**

Printed by Jouve, 75001 PARIS (FR)

## Beschreibung

Die Erfindung betrifft ein Verfahren zum Befüllen von Wursthüllen gemäß dem Oberbegriff des Anspruchs 1 mit Hilfe einer Füllmaschine, bei dem Füllgut durch ein Füllrohr in eine Wursthülle ausgestoßen wird, die jeweils nach Einfüllen einer Portion abgedreht wird, um einzelne Würste zu bilden, wobei die abgedrehten Würste mit einer Geschwindigkeit abgefördert werden, die in Abhängigkeit eines Soll-Füllgutausstoßverlaufes eingestellt wird. Weiterhin betrifft die Erfindung eine Vorrichtung zur Durchführung eines solchen Verfahrens.

Bei der automatischen Wurstherstellung werden üblicherweise Füllmaschinen eingesetzt. Solche Füllmaschinen bringen Wurstbrät durch ein Füllrohr in eine Wursthülle ein. Die Wursthülle befindet sich dazu vorher in gerafftem Zustand direkt auf dem Füllrohr oder einer entsprechenden Hülse, die über das Füllrohr geschoben ist. Im allgemeinen befindet sich am Ende des Füllrohres eine sogenannte Darmbremse bzw. ein Bremsring. Nach dem Ausstoß einer Wurstbrätportion aus dem Füllrohr, die einer einzelnen Wurst entspricht, wird die Wursthülle mit Hilfe des Bremsringgetriebes und einer Abdrehvorrichtung abgedreht.

Um das Wurstbrät durch das Füllrohr zu pressen, wird ein entsprechendes Füllorgan eingesetzt, das das Wurstbrät intermittierend in das Füllrohr befördert. Eine solche Füllmaschine ist z.B. in dem europäischen Patent Nr. 0232812 beschrieben.

Um Würste mit konstanter Länge sicherstellen zu können, wird dem Füllrohr ein angetriebenes Längengerät nachgeschaltet. Dieses Längengerät zieht die Wursthülle durch den Bremsring hindurch vom Füllrohr ab. Während des Abdrehvorgangs wird die bereits gefüllte Wurst durch das Längengerät daran gehindert, sich mit dem gedrehten Teil der Wursthülle mitzudrehen.

Durch Einstellung der Abfördergeschwindigkeit während der Wurstbefüllung im Verhältnis zu der Füllgutausstoßgeschwindigkeit kann die Länge der einzelnen Würste festgelegt werden. Die Geschwindigkeit, mit der die gefüllte Wursthülle abbefördert wird, wird in Abhängigkeit einer Soll-Füllgutausstoßgeschwindigkeit eingestellt.

Ein derartiges Verfahren ist in der deutschen Offenlegungsschrift 2402817 beschrieben.

Bei dem dort geschilderten Verfahren wird die Abförderungsgeschwindigkeit des Längengerätes direkt proportional zu der Geschwindigkeit des Füllorgans innerhalb der Füllmaschine gesteuert.

Es zeigt sich jedoch, daß sich mit einer Steuerung proportional zum Soll-Füllgutausstoß das Volumen und die äußere Form der einzelnen Würste nur unzureichend reproduzieren läßt, im speziellen, wenn Naturdarm als Wursthülle eingesetzt wird. Zum einen sind bei Naturdarm die Wanddicke und auch das Kaliber nicht konstant, so daß sich unterschiedliche Wurstformen ergeben können, zum anderen kann sich aufgrund der nicht konstanten Dehnfähigkeit bei ungleichmäßigem Füllgutausstoßverlauf eine ungleichmäßige äußere Form ergeben.

Angesichts dieses Standes der Technik ist es die Aufgabe der vorliegenden Erfindung, ein Verfahren und eine Vorrichtung zur Befüllung von Wursthüllen zur Verfügung zu stellen, mit dem Würste gleicher Länge und gleichem Volumen insbesondere auch mit Naturdarm als Wursthülle hergestellt werden können.

Diese Aufgabe wird bei dem gattungsgemäßen Verfahren mit den Merkmalen des kennzeichnenden Teiles des Anspruchs 1 gelöst.

Bei dem erfindungsgemäßen Verfahren wird die Wurstabfördergeschwindigkeit in Abhängigkeit von dem zu erwartenden tatsächlichen Füllgutausstoßverlauf gewählt, wobei Parameter einfließen, die den tatsächlichen Füllgutausstoß beeinflussen.

Dieser Lösung liegt die Erkenntnis zugrunde, daß der tatsächliche Füllgutausstoßverlauf nicht notwendigerweise mit dem Sollwert für den Füllgutausstoßverlauf übereinstimmt, der z.B. durch den Bewegungsablauf des Füllorgans, z.B. der Förderpumpe, vorgegeben ist, und daß für eine gleichmäßige Befüllung einer Wursthülle in Naturdarm von Bedeutung ist, wie der Füllgutausstoß tatsächlich verläuft. Ist der tatsächliche Füllgutausstoßverlauf ungleichmäßig, und wird - wie die Erfindung vorsieht - die Abförderungsgeschwindigkeit der gefüllten Wursthülle diesem tatsächlichen Füllgutausstoßverlauf angepaßt, so lassen sich, wie sich ergeben hat, auch Würste im Naturdarm mit gleicher Länge und gleichem Volumen, auch mit praller Füllung herstellen. In die Nachbildung des zu erwartenden tatsächlichen Füllgutausstoßverlaufes fließt der vorgegebenen Soll-Füllgutausstoßverlauf und andere Parameter ein, um die Geschwindigkeit des Längengerätes zu steuern. Durch das Abführen der gefüllten Wursthülle mit einer Geschwindigkeit, die den zu erwartenden tatsächlichen Füllgutausstoßverlauf berücksichtigt, ist eine gleichmäßigere Füllung der Wursthülle gewährleistet. Es hat sich zudem gezeigt, daß bei einer derartigen gleichmäßigeren Befüllung Ungleichmäßigkeiten der Wanddikke, und des Kalibers, wie sie z.B. bei Naturdarm auftreten, ausgeglichen werden. Unterschiedliche Elastizitäten und Dehnfähigkeiten des Darmmaterials bleiben weitgehend ohne Einfluß. Durch die exaktere Regelung des Geschwindigkeitsverlaufs entsprechend dem Kaliber und dem Portionsausstoß wird die Formgebung der Wurst durch die Transportbänder bestimmt. Die Portionslänge und das Füllkaliber können in bestimmten Grenzen über den Geschwindigkeitsverlauf der Transportbänder bezüglich des Füllgutausstoßverlaufs verändert werden. Auch kann die Portionslänge kürzer oder länger sein als bei herkömmlicher Produktsweise. Insbesondere sind auch die Durchmesserunterschiede über eine Portionslänge geringer.

Besonders vorteilhafterweise fließt als ein Parameter die Kompressibilität des Füllgutes ein. Je nach Kompressibilität des Füllgutes wird der durch das Füllorgan vorgegebene Soll-Füllgutausstoßverlauf am Füllrohrausgang mehr oder weniger gut realisiert.

Einfacherweise kann die Kompressibilität mit einer Druckmessung im auszustoßenden Füllgut durchgeführt werden. Für das vom Füllorgan ausgestoßene Volumen kann aus einer solchen Druckmessung die Kompressibilität des Füllgutes bestimmt werden.

Gemäß einer Ausgestaltung des erfindungsgemäßen Verfahrens wird die Kompressibilität des Füllgutes im vorhinein festgestellt und die Abhängigkeit der Wurstabfördergeschwindigkeit dementsprechend gewählt. Durch vorausgehende Tests oder mit Hilfe von Erfahrungswerten können für verschiedene Wurstsorten die Kompressibilitäten erfaßt und bei gegebenem Soll-Füllgutausstoßverlauf der Füllmaschine der zu erwartende tatsächliche Füllgutausstoßverlauf am Ende des Füllrohres im vorhinein bestimmt werden.

Gemäß einer Weiterbildung des erfindungsgemäßen Verfahrens gehen in die Abschätzung des zu erwartenden tatsächlichen Füllgutausstoßes die Füllrohrausmaße ein. Je nach Länge und Durchmesser des Füllrohres wird der durch die Füllmaschine vorgegebene Soll-Füllgutausstoßverlauf mehr oder weniger gut am Füllrohrende reproduziert. So tritt z.B. bei einem längeren Füllrohr mit kleinerem Querschnitt eine größere Abweichung des tatsächlichen Füllgutausstoßverlaufes von dem durch die Pumpe vorgegebenen Soll-Füllgutausstoßverlaufes auf.

Gemäß einer weiteren Weiterbildung fließt in die Festlegung der Abhängigkeit die Geschwindigkeit der Füllmaschine ein. Bei höherer Befüllgeschwindigkeit muß nicht nur das Längengerät schneller betrieben werden, sondern es sollte vorteilhafterweise auch berücksichtigt werden, daß der tatsächliche Füllgutausstoßverlauf in stärkerem Maße von dem durch die Füllmaschine vorgegebenen Soll-Füllgutausstoßverlauf abweicht.

Gemäß einer Ausführungsform wird der Soll-Füllgutausstoßverlauf direkt aus dem Bewegungsverlauf des Füllorgans in der Füllmaschine bestimmt. Aus dem so bestimmten Soll-Füllgutausstoßverlauf kann parameterabhängig die Wurstabförderungsgeschwindigkeit festgelegt werden.

Die Aufgabe der Erfindung wird weiterhin durch eine Vorrichtung zur Befüllung von Wursthüllen mit den Eigenschaften des Anspruchs 8 gelöst. Bei der erfindungsgemäßen Vorrichtung ist eine Regel- bzw. Steuereinheit vorgesehen, die die Geschwindigkeit des Längengerätes in Abhängigkeit des zu erwartenden Füllgutausstoßes steuert. Mit einer solchen Vorrichtung läßt sich das erfindungsgemäße Verfahren dann durchführen.

Gemäß einer Ausführungsform ist eine Eingabemöglichkeit zur Eingabe von Parametern vorgesehen. Mit Hilfe einer derartigen Eingabemöglichkeit kann ein Benutzer Parameter von außen in die Maschine eingeben. Aus diesen Parametern bestimmt die Steuereinheit dann den zu erwartenden tatsächlichen Füllgutausstoßverlauf bei vorgegebenem Soll-Füllgutausstoßverlauf, um die Wurstabförderungsgeschwindigkeit des Längengerätes festlegen zu können.

Gemäß einer Weiterbildung kann ein Sensor vorgesehen sein, der die Kompressibilität des Füllgutes bestimmt. Ein solcher Sensor ermöglicht eine in-situ-Messung der Kompressibilität des Füllgutes, so daß dieser Parameter nicht vorher bestimmt bzw. eingegeben werden muß. Der Sensor kann sich z.B. im Bereich des Füllrohrausganges befinden.

Vorteilhafterweise ist eine Speichereinrichtung vorgesehen zur Ablage von Verläufen der Wurstabförderungsgeschwindigkeit, die im vorhinein für verschiedene Parameterwerte (entsprechend z.B. unterschiedlichen Wurstsorten bzw. Füllrohrausmaßen) bestimmt wurden. Werden von einem Benutzer entsprechende Parameter eingegeben, so kann die Steuereinheit einen entsprechenden Verlauf aus der Speichereinheit aufrufen und so unter Berücksichtigung des Soll-Füllgutausstoßes die Wurstabförderungsgeschwindigkeit des Längengerätes festlegen.

Besonders wirkungsvoll läßt sich eine erfindungsgemäße Steuerung bei einer Füllmaschine einsetzen, die als Förderpumpe eine Flügelzellenpumpe umfaßt.

Die Erfindung wird anhand der anliegenden Figuren näher erläutert. Dabei zeigt

Fig. 1  schematisch eine Ausführungsform einer erfindungsgemäßen Vorrichtung zur Befüllung von Wursthüllen, mit der das erfindungsgemäße Verfahren durchgeführt werden kann,

Fig. 2  ein Blockschaltbild zur Erläuterung der Zusammenhänge der einzelnen Parameter,

Figuren 3a bis 3d  Soll-Ist-Vergleiche des Füllgutausstoßverlaufes mit Füllgütern verschiedenen Luftanteils, und

Fig. 4  ein Diagramm, das den Zusammenhang zwischen tatsächlichem Füllgutausstoßverlauf und dem Geschwindigkeitsverlauf der Wurstabförderung zeigt.

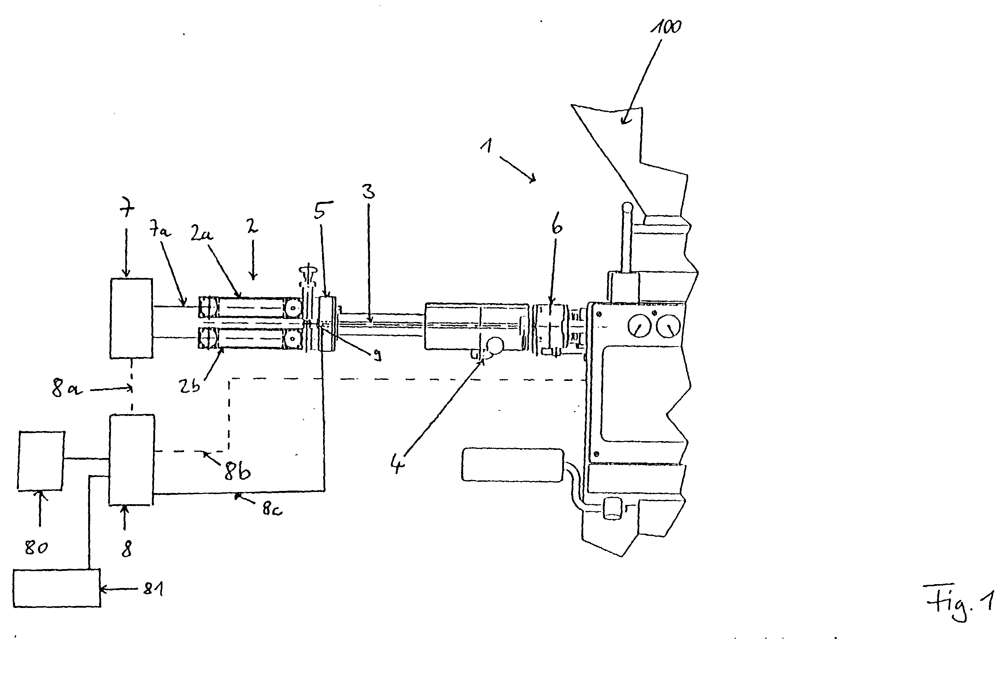

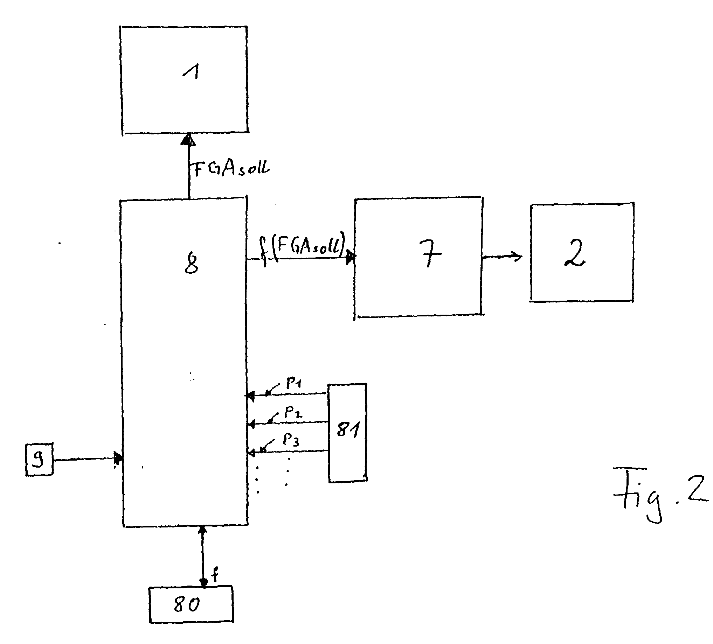

Fig. 1 zeigt schematisch eine Ausführungsform der erfindungsgemäßen Vorrichtung und stellt den Ausstoßbereich einer Füllmaschine 1 dar. 100 bezeichnet einen Einfülltrichter für das Wurstbrät. Aus dem Füllrohr 3 wird das Wurstbrät ausgestoßen. Dazu ist innerhalb der Füllmaschine 1 eine nicht gezeigte Flügelzellenpumpe vorgesehen. Das Füllrohr 3 kann mit Hilfe der Abdrehvorrichtung 6 um seine eigene Achse gedreht werden. Am Ende des Füllrohres befindet sich ein Bremsringgehäuse 5, durch das mit Hilfe des Längengerätes 2 die Wursthülle abgezogen wird, während sie durch das Füllrohr 3 befüllt wird. Das Längengerät 2 umfaßt zwei angetriebene Endlosbänder 2a und 2b, die zwischen sich die gefüllte Wurst abtransportieren. Das Bremsringgehäuse und das Längengerät sind mit einem Schwenkhebel 4 gegenüber dem Füllrohr 3 verschwenkbar.

Mit 7 ist ein Antrieb für die Endlosbänder 2a und 2b des Längengerätes 2 bezeichnet, der über nicht näher zu erläuternde Verbindungen 7a mit diesen kraftschlüssig verbunden ist. Zur Geschwindigkeitssteuerung dieses Antriebs ist eine Steuerung 8 vorgesehen, die über eine Leitung 8a mit dem Antrieb 7 in Verbindung steht. Eine weitere Leitung 8b kann vorgesehen sein, um die Steuerung mit der Füllmaschine 1 zu verbinden. Eine Druckdose 9 kann am Füllrohrausgang vorgesehen sein, um die Kompressibilität des Wurstbräts zu bestimmen und diese über die Leitung 8c an die Steuerung 8 zu übermitteln. Die Steuerung ist mit einem Tastenfeld 81 und einer Speichereinheit 80 verbunden.

Der Betrieb einer derartigen Wursthüllenbefüllmaschine wird nun im folgenden beschrieben. In an sich bekannter Weise wird das Längengerät 2 und das Bremsringgehäuse 5 mit Hilfe des Schwenkhebelmechanismus 4 von dem Füllrohr 3 weggeschwenkt. Eine geraffte Wursthülle wird auf das Füllrohr aufgebracht und das Längengerät 2 und das Bremsringgehäuse 5 wieder zurückgeschwenkt. Über den Trichter 100 wird Wurstbrät in die Füllmaschine 1 eingefüllt. Mit Hilfe der in der Füllmaschine 1 befindlichen Flügelzellenpumpe wird das Wurstbrät durch das Füllrohr 3 ausgepreßt und füllt die Wursthülle. Diese wird dadurch von dem Füllrohr 3 abgezogen. Die gefüllte Wursthülle wird von den Endlosbändern 2a und 2b erfaßt, die sich in einer Weise bewegen, daß sie die gefüllte Wurst von dem Füllrohr 3 wegbewegen. Zur Aufrechterhaltung der nötigen Spannung befindet sich in dem Bremsringgehäuse 5 ein Bremsring, durch den die Wursthülle mit Hilfe des Längengerätes 2 von dem Füllrohr 3 abgezogen wird. Nachdem von der Füllmaschine 1 die Portion Wurstbrät für eine einzelne Wurst durch das Füllrohr 3 ausgepreßt wurde, wird das Füllrohr 3 zusammen mit dem gerafften, noch nicht gefüllten Wursthüllenmaterial durch das Abdrehgetriebe 6 gedreht. Da die bereits gefüllte Wursthülle durch das Längengerät 2 bzw. durch dessen Endlosbänder 2a und 2b gehalten wird, entsteht eine Abschnürung, die zur Ausbildung einzelner Würste führt.

Zu Beginn des Befüllprozesses gibt der Benutzer mit Hilfe des Tastenfeldes 81 entsprechende Parameter in die Steuerung 8 ein, die zur Steuerung der Füllmaschine und des Längengerätes dient. Derartige Parameter sind z. B. die gewünschte Länge, das gewünschte Gewicht und die gewünschte Geschwindigkeit der Füllmaschine 1. Aus diesen Eingaben bestimmt die Steuerung 8 die Geschwindigkeit, mit der der Antrieb 7 das Längengerät 2 antreiben muß, so daß die Wurstabfördergeschwindigkeit den tatsächlichen Füllgutausstoß möglichst gut nachbildet. Dazu gibt der Benutzer weiterhin die Art des Wurstbräts und die Füllrohrausmaße ein. Die Steuerung 8 liest dann die aus der Speichereinheit 80 zu diesem Wurstbrät gehörigen Parameter, z.B. die Kompressibilität, aus und bestimmt aus diesen und den anderen eingegebenen Parametern den zu erwartenden tatsächlichen Füllgutausstoßverlauf am Füllrohrende. Dazu kann die Steuerung 8 wiederum auf vorgegebene Verläufe zurückgreifen, die bestimmt werden, wie es weiter unten beschrieben wird.

Abweichend von dem oben beschriebenen Verfahrensablauf kann auch vorgesehen sein, daß der Benutzer die Kompressibilität im vorhinein für das aktuelle Wurstbrät bestimmt und als Parameter eingibt. Ebenso ist es denkbar, daß mit Hilfe einer Druckdose 9 am Füllrohrausgang oder z.B. am Füllgutauslauf der Maschine (dort, wo das Füllgut in das Füllrohr eintritt) der Druck in dem ausgestoßenen Wurstbrät bestimmt wird und daraus die Kompressibilität bestimmt wird und zur Steuerung der Geschwindigkeit des Antriebs 7 für das Längengerät 2 eingesetzt wird.

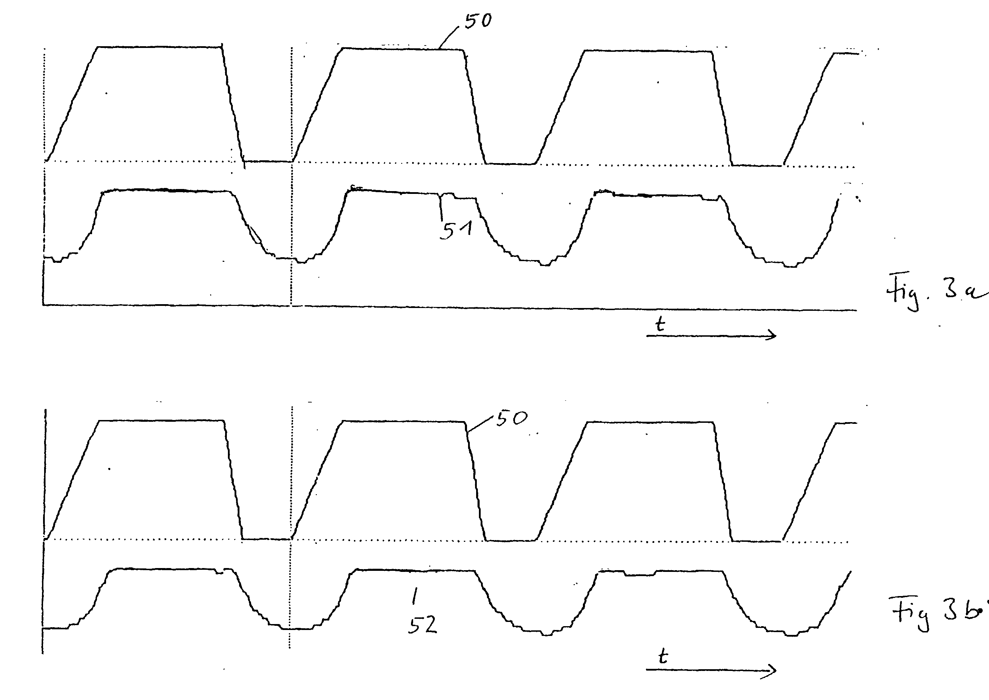

In der Fig. 2 ist ein Blockschaltbild eines Ausführungsbeispiels zur Erläuterung der Wirkungsweise der Steuerung 8 dargestellt. Die Steuerung 8 erhält als Eingabe mehrere Werte (z.B. Portionsvolumen, Füllpause und dergleichen mehr). Diese Werte können vom Benutzer über das Tastenfeld 81 eingegeben werden. Aus diesen eingegebenen Werten errechnet sich die Steuerung 8 den Soll-Füllgutausstoßverlauf und gibt diesen Wert an die Füllmaschine 1 weiter ($FGA_{soll}$). Entsprechend diesem Wert wird dann die Flügelzellenpumpe zum Ausstoß des Wurstbrätes betrieben. Der Vorgabewert ($FGA_{soll}$), der an die Flügelzellenpumpe weitergegeben wird, steuert den Antrieb der Flügelzellenpumpe. Die Drehbewegung der Flügelzellenpumpe kann dann auch über einen Sensor überwacht werden, so daß in Art einer Regelung eine Rückmeldung an die Steuerung erfolgen kann. Dieses Sensorsignal könnte auch alternativ unmittelbar als Soll-Füllgutausstoßverlaufsignal verwendet werden.

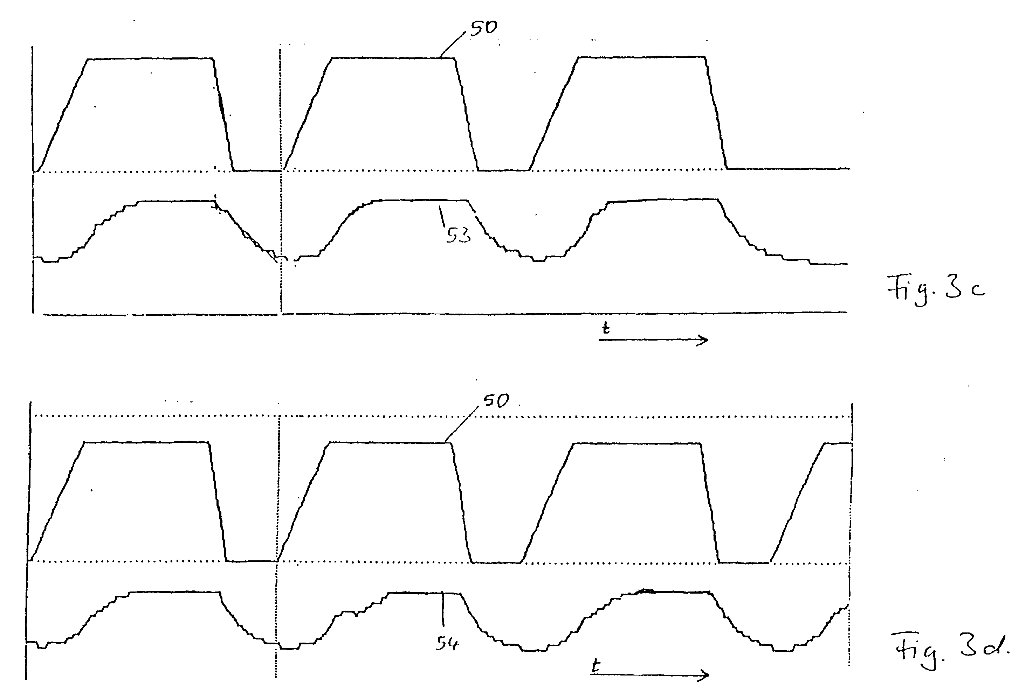

Die Steuerung 8 ermittelt außerdem eine Funktion f ($FGA_{soll}$) die von Parametern p1, p2 abhängig ist und den bei vorgegebenem Soll-Füllgutausstoßverlauf und den Parametern $p_1$, $p_2$,.. zu erwartenden tatsächlichen Füllgutausstoßverlauf möglichst gut nachbildet. Auch die Parameter $p_1$, $p_2$,... können an der Eingabetastatur 81 eingegeben werden und sind z.B. die Kompressibilität des Wurstbräts oder die Füllrohrausmaße. Der Soll-Füllgutausstoßverlauf ist, wie weiter unten noch anhand der Fig. 3a bis 3d erläutert werden wird, zeitabhängig und ist in den Kurven 50 dargestellt. Auf diesen Wert des Soll-Füllgutausstoßverlaufes wendet die Steuerung 8 nun die erwähnte Funktion f an. Der Funktionswert wird z.B. in ein Spannungssignal umgesetzt und an den Antrieb 7 des Längengeräts 2 weitergegeben, der dann das Längengerät 2 mit einem entsprechenden Geschwindigkeitsverlauf

$$v_{AF} = f_{p1, p2, \ldots} (FGA_{soll}(t)$$

bewegt, wobei t die Zeit und $v_{AF}$ die Wurstabfördergeschwindigkeit des Längengerätes 2 darstellt.

Zur Bestimmung der Funktion f greift die Steuerung 8 auf eine Speichereinheit 80 zurück, in der verschiedene Funktionsverläufe f für verschiedene Parameter p1, p2, p3, ... abgelegt sind. Diese Parameter wurden, wie oben beschrieben, von dem Benutzer im vorhinein über das Tastenfeld 81 eingegeben. Alternativ kann aber auch vorgesehen sein, die entsprechenden Parameter, wie z.B. die Kompressibilität, im Betrieb zu messen und aktuell automatisch einzugeben. Dies ist durch den Anschluß des Sensors 9 angedeutet.

Im folgenden wird ein Beispiel für die Bestimmung der Funktionsverläufe f, die in der Speichereinheit 80 abgelegt sind, gegeben. Figuren 3a bis 3d beschreiben den tatsächlichen Füllgutausstoßverlauf 51, 52, 53, 54, der für Wurstbrät verschiedener Luftanteile entsteht, wenn der gleiche Soll-Füllgutausstoßverlauf 50 vorgegeben wird. In Fig. 3a beträgt der Luftanteil 8%, in Fig. 3b 12%, in Fig. 3c 14,5% und in Fig. 3d 18%. Der Soll-' Füllgutausstoßverlauf 50 entspricht dem Bewegungsverlauf der Flügelzellenpumpe in der Füllmaschine 1 in Abhängigkeit der Zeit t, die das Wurstbrät entsprechend in das Füllrohr 3 preßt. Dieser Soll-Füllgutausstoßverlauf wird in unvollkommener Weise am Füllrohrende reproduziert. Mit steigendem Luftanteil wird der tatsächliche Füllgutausstoßverlauf flach (siehe Fig. 3d), obwohl die Soll-Vorgabe nicht geändert wurde. Insbesondere erkennt man, daß sich die Winkel der Anstiegs- und Abfallflanken beim tatsächlichen Füllgutausstoßverlauf der Kurven 51 bis 54 jeweils stark unterscheiden, je nach Luftanteil.

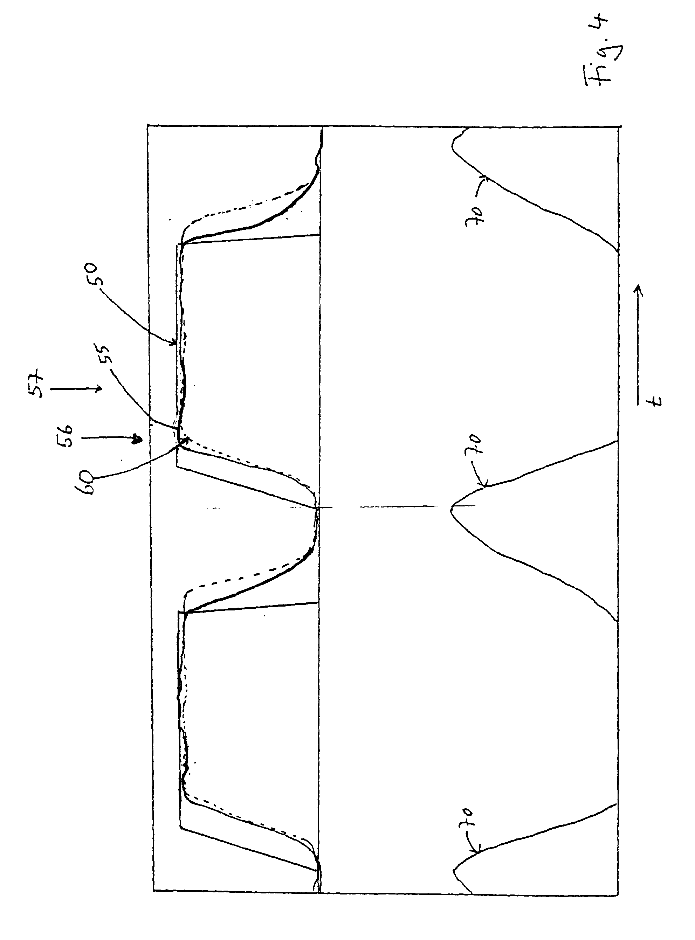

Diese experimentell ermittelten Füllgutausstoßverläufe 51, 52, 53, 54 können in der Speichereinheit 80 abgelegt werden und dann in Abhängigkeit der Kompressibilität eines aktuell zu verarbeitenden Bräts von der Steuerung 8 abgerufen werden, um bei vorgegebenem Soll-Füllgutausstoßverlauf 50 die Abfördergeschwindigkeit $v_{AF}$ so zu steuern, daß sie dem tatsächlichen Füllgutausstoßverlauf möglichst genau Rechnung tragen kann. Wenn also z.B. bekannt ist oder zuvor gemessen worden ist, daß eine bestimmte aktuell abzufüllende Brätsorte eine Kompressibilität von 14,5% hat, wird in der Bedieneinheit 81 dieser Parameter eingegeben. Die Steuerung 8 holt sich dann aus dem Speicher 80 die entsprechende Funktion (z.B. Fig. 3c), die zuvor für diesen Luftanteilswert ermittelt worden ist und kann dann mit dieser Funktion die Transportbandgeschwindigkeit so anpassen, daß diese dem tatsächlich zu erwartenden Füllgutausstoß möglichst nahe kommt. Anhand von Fig. 4 wird dies noch deutlicher.

In Fig. 4 ist die erfindungsgemäß geregelte Wurstabfördergeschwindigkeit (Transportbandgeschwindigkeit) $v_{AF}$ mit gestrichelter Linie 60 dargestellt. Mit 50 ist wiederum der Soll-Füllgutausstoßverlauf gegeben, der sich direkt aus dem Bewegungsverlauf der Flügelzellenpumpe ergibt. Bei proportionaler Steuerung wie im Stand der Technik würde sich das Transportband mit einem Geschwindigkeitsprofil entsprechend dieser Kurve 50 bewegen.

Wie bereits erwähnt, wird nun jedoch aufgrund brätabhängiger Parameter, z.B. dem Luftanteil im Brät oder z.B. der Füllrohrausmaße, der tatsächlich erreichte Füllgutausstoß nicht ideal entsprechend der Kurve 50 stattfinden, sondern z.B. so, wie er mit der ebenfalls durchgezogenen Kurve 55 dargestellt ist.

Diesem tatsächlichen Verlauf kann mit der Erfindung Rechnung getragen werden, indem nun von der Regeleinheit 8 die Wurstabfördergeschwindigkeit, also die Transportbandgeschwindigkeit $V_{AF}$, entsprechend der gestrichelt dargestellten Kurve 60 gesteuert wird. Man sieht insbesondere, daß im Bereich der ansteigenden Flanken (Bereich 56) der tatsächlich zu erwartende Füllgutausstoßanstieg durch einen entsprechenden Anstieg der Wurstabfördergeschwindigkeit angepaßt sein kann. Insbesondere können dann unterschiedliche Anstiegsverläufe reproduziert werden. Es wird also nicht immer mit der konstanten, durch die Sollfüllgutausstoßverlauf 50 erkennbaren Anstiegsflanke gearbeitet, sondern variabel je nach tatsächlich verwendetem Wurstbrät. Dies führt letztlich zu einer Entlastung der Wursthülle und einer sehr gleichmäßigen Füllung. Es wird mit dieser Maßnahme daher möglich, Würste gleicher Länge und gleichem Volumens auch im Naturdarm zu erzeugen, die außerdem eine gleichbleibende äußere Form aufweisen.

Wie im jeweils rechten Abstiegsflankenbereich zu erkennen ist, wird beim Beginn des Füllendes, also wenn der Füllgutausstoß weniger wird, noch etwas länger Darm abgezogen (gestrichelte Linie). In diesem Bereich wird also bewußt die Füllgutausstoßreduzierung kurzzeitig nicht mit einer Wurstabfördergeschwindigkeitsreduzierung gekoppelt, um durch den dadurch zusätzlich abgezogenen Darm Abdrehungen spannungsfrei anbringen zu können.

Der Verlauf des Abdrehgetriebes ist in der Fig. 4 dargestellt und mit dem Bezugszeichen 70 versehen.

Man erkennt die Zuordnung zu den Phasen des Füllgutausstoßes. Wie man insbesondere sieht, wird das Abdrehen in Überlagerung zum Füllgutausstoßverlauf gestartet. Bei der maximalen Abdrehgeschwindigkeit des Abdrehgetriebes ist der Füllgutausstoß Null und läuft dann beim Herunterfahren des Abdrehgetriebes wieder an.

Die erfindungsgemäße Regelung der Wurstabförderungsgeschwindigkeit, d.h. des Bewegungsverlaufes des Längengerätes 2, ermöglicht es, auch bei Naturdarm als Hüllenmaterial Würste gleicher Länge und gleichen Volumens zu erzeugen, die einen gleichmäßigen Außendurchmesser haben.

**Patentansprüche**

1. Verfahren zur Befüllung von Wursthüllen mit einer Füllmaschine, bei dem Füllgut durch ein Füllrohr in eine Wursthülle ausgestoßen wird, diese jeweils nach Einfüllen einer Portion, die einer einzelnen Wurst entspricht, abgedreht wird, um einzelne Würste zu bilden, wobei die gefüllte Wursthülle mit einer Geschwindigkeit ($v_{AF}$) abgefördert wird, die in Abhängigkeit eines Soll-Füllgutausstoßverlaufes ($FGA_{soll}$) eingestellt wird,
**dadurch gekennzeichnet, daß**
die Wurstabfördergeschwindigkeit ($v_{AF}$, 60) in Abhängigkeit von dem zu erwartenden tatsächlichen Füllgutausstoßverlauf gewählt wird, wobei Parameter ($p_1$, $p_2$,...) einfließen, die den tatsächlichen Füllgutausstoßverlauf beeinflussen.

2. Verfahren nach Anspruch 1, **dadurch gekennzeichnet, daß** die Parameter p1, p2, ... die Kompressibilität des Füllgutes umfassen.

3. Verfahren nach Anspruch 2, **dadurch gekennzeichnet, daß** zur Bestimmung der Kompressibilität eine Druckmessung im auszustoßenden Füllgut durchgeführt wird.

4. Verfahren nach Anspruch 2, **dadurch gekennzeichnet, daß** die Kompressibilität des Füllgutes im vorhinein festgestellt wird und die Abhängigkeit dementsprechend gewählt wird.

5. Verfahren nach einem der Ansprüche 1 bis 4, **dadurch gekennzeichnet, daß** die Parameter p1, p2, ... die Füllrohrausmaße umfassen.

6. Verfahren nach einem der Ansprüche 1 bis 5, **dadurch gekennzeichnet, daß** die Parameter p1, p2, ... die Geschwindigkeit der Füllmaschine (1) umfassen.

7. Verfahren nach einem der Ansprüche 1 bis 6, **dadurch gekennzeichnet, daß** der Soll-Füllgutausstoßverlauf ($FGA_{soll}(t)$) direkt aus dem Bewegungsverlauf des Füllorgans bestimmt wird.

8. Vorrichtung zur Befüllung von Wursthüllen zur Durchführung des Verfahrens nach einem der vorherigen Ansprüche, mit einer Förderpumpe, einem Füllrohr (3) und einem Längengerät (2), wobei die Vorrichtung weiterhin eine Steuereinheit (8) umfaßt, die die Geschwindigkeit des Längengerätes (2, 2a, 2b) in Abhängigkeit des zu erwartenden tatsächlichen Füllgutausstoßverlaufes steuert.

9. Vorrichtung nach Anspruch 8, **gekennzeichnet durch** eine Eingabemöglichkeit (81) zur Eingabe von den den tatsächlichen Füllgutausstoßverlauf beeinflussenden Parametern (p1, p2, ...).

10. Vorrichtung nach Anspruch 8, **gekennzeichnet durch** einen Sensor (9), zur Bestimmung der Kompressibilität des Füllgutes.

11. Vorrichtung nach Anspruch 10, **dadurch gekennzeichnet, daß** der Sensor ein Drucksensor (9) im Bereich des Füllrohrausganges ist.

12. Vorrichtung nach einem der Ansprüche 8 bis 11, **gekennzeichnet durch** eine Speichereinheit (80) zur Speicherung von zu erwartenden tatsächlichen Füllgutausstoßverläufen.

13. Vorrichtung nach einem der Ansprüche 8 bis 12, **dadurch gekennzeichnet, daß** die Förderpumpe eine Flügelzellenpumpe ist.

**Claims**

1. A method of filling sausage casings with a filling machine, wherein filling material is ejected through a filling tube into a sausage casing, said casing being twisted off after a respective portion which is representative of an individual sausage has been filled in, in order to form individual sausages, the filled sausage casing being discharged at a speed ($V_{AF}$) which is adjusted in dependence upon a set filling-material output characteristic ($FMO_{set}$),
**characterized in that**
the sausage discharge speed ($V_{AF}$, 60) is chosen in dependence upon the actual filling-material output characteristic to be expected, including parameters ($p_1$, $p_2$, ...) which influence the actual filling-material output characteristic.

2. The method according to claim 1, **characterized in that** the parameters p1, p2, ... include the compressibility of the filling material.

3. The method according to claim 2, **characterized in that** a pressure measurement is carried out in the filling material to be ejected for determining compressibility.

4. The method according to claim 2, **characterized in that** the compressibility of the filling material is determined in advance, and the dependency is chosen accordingly.

5. The method according to any one of claims 1 to 4, **characterized in that** the parameters p1, p2, ... include the dimensions of the filling tube.

6. The method according to any one of claims 1 to 5, **characterized in that** the parameters p1, p2, ... include the speed of the filling machine (1).

7. The method according to any one of claims 1 to 6, **characterized in that** the set filling-material output characteristic ($FMO_{set}(t)$) is directly determined on the basis of the motional characteristic of the filling device.

8. An apparatus for filling sausage casings for performing the method according to any one of the preceding claims, comprising a delivery pump, a filling tube (3) and a length-adjusting device (2), said apparatus further comprising a control unit (8) which controls the speed of the length-adjusting device (2, 2a, 2b) in dependence upon the actual filling-material output characteristic to be expected.

9. The apparatus according to claim 8, **characterized by** an input possibility (81) for entering parameters (p1, p2, ...) influencing the actual filling-material output characteristic.

10. The apparatus according to claim 8, **characterized by** a sensor (9) for determining the compressibility of the filling material.

11. The apparatus according to claim 10, **characterized in that** the sensor is a pressure sensor (9) in the area of the filling tube outlet.

12. The apparatus according to any one of claims 8 to 11, **characterized by** a storage unit (80) for storing actual filling-material output characteristics to be expected.

13. The apparatus according to any one of claims 8 to 12, **characterized in that** the delivery pump is a vane-cell pump.

**Revendications**

1. Procédé de remplissage de boyaux de saucisses par une remplisseuse, selon lequel de la chair à saucisse est éjectée au travers d'un tube de remplissage dans un boyau de saucisse, celui-ci est détaché par torsion après chaque remplissage d'une portion qui correspond à une saucisse individuelle pour former des saucisses individuelles, le boyau de saucisse rempli étant évacué à une vitesse ($V_{AF}$), réglée en fonction d'une allure de consigne d'éjection de la chair ($FGA_{soll}$), **caractérisé en ce que** la vitesse d'évacuation des saucisses ($V_{AF}$, 60) est choisie en fonction de l'allure effective prévisible d'éjection de la chair à saucisse, avec intervention de paramètres ($p_1$, $p_2$,...) qui influent sur l'éjection effective de la chair à saucisse.

2. Procédé suivant la revendication 1, **caractérisé en ce que** les paramètres p1, p2, ... comportent la compressibilité de la chair à saucisse.

3. Procédé suivant la revendication 2, **caractérisé en ce qu'**une mesure de pression dans la chair à saucisse à éjecter est réalisée pour la détermination de la compressibilité.

4. Procédé suivant la revendication 2, **caractérisé en ce que** la compressibilité de la chair à saucisse est fixée à l'avance et la relation est choisie en conséquence.

5. Procédé suivant l'une des revendications 1 à 4, **caractérisé en ce que** les paramètres p1, p2, ... comportent les dimensions du tube de remplissage.

6. Procédé suivant l'une des revendications 1 à 5, **caractérisé en ce que** les paramètres p1, p2, ... comportent la vitesse de la remplisseuse (1).

7. Procédé suivant l'une des revendications 1 à 6, **caractérisé en ce que** l'allure de consigne d'éjection de la chair à saucisse ($FGA_{soll}$(t)) est déterminée directement à partir de l'allure des mouvements de l'organe de remplissage.

8. Dispositif de remplissage de boyaux de saucisses pour la mise en ouvre du procédé suivant l'une des revendications précédentes, comprenant une pompe de circulation, un tube de remplissage (3) et un appareil de mise à longueur (2), le dispositif comprenant en outre une unité de commande (8), qui commande la vitesse de l'appareil de mise à longueur (2, 2a, 2b) en fonction de l'allure effective prévisible d'éjection de la chair à saucisse.

9. Dispositif suivant la revendication 8, **caractérisé par** une possibilité d'introduction (81) pour introduire les paramètres (p1, p2, ...) influant sur l'allure effective d'éjection de la chair à saucisse.

10. Dispositif suivant la revendication 8, **caractérisé par** un capteur (9) pour déterminer la compressibilité de la chair à saucisse.

11. Dispositif suivant la revendication 10, **caractérisé en ce que** le capteur est un capteur de pression (9) dans la zone de la sortie du tube de remplissage.

12. Dispositif suivant l'une des revendications 8 à 11, **caractérisé par** une unité de mémorisation (80) pour mémoriser des allures effectives prévisibles d'éjection de la chair à saucisse.

13. Dispositif suivant l'une des revendications 8 à 12, **caractérisé en ce que** la pompe de circulation est une pompe multicellulaire.

Fig. 1

Fig. 2

Fig. 3a

Fig. 3b

Fig. 3c

Fig. 3d

Fig. 4